# EUROPÄISCHE PATENTSCHRIFT

(11) **EP 2 143 524 B1**
(45) Veröffentlichungstag und Bekanntmachung des Hinweises auf die Patenterteilung: **19.01.2011**
(21) Anmeldenummer: 09006902.2
(22) Anmeldetag: 22.05.2009
(51) Int. Cl.: B23Q 7/04, B21D 43/05, B27C 1/12, B27C 5/06

(54) **Vorrichtung zum Fördern eines Werkstücks**
Device for conveying a workpiece
Dispositif de transport d'une pièce usinée

(30) Priorität: 09.07.2008 DE 102008032302
(43) Veröffentlichungstag der Anmeldung: 13.01.2010
(73) Patentinhaber: Weinmann Holzbausystemtechnik GmbH, 72813 St. Johann (DE)
(72) Erfinder: Weinmann, Karl, 72813 St. Johann (DE)
(74) Vertreter: Kohler Schmid Möbus

(56) Entgegenhaltungen:
- EP-A- 0 945 212
- EP-A- 0 988 924
- EP-A- 1 683 604
- US-A- 3 564 702

## Beschreibung

Die Erfindung betrifft eine Vorrichtung zum Fördern eines Werkstücks aus einer Bearbeitungsstation und/oder zu einer Bearbeitungsstation mit einer Greifeinrichtung mit Greifbacken, die das Werkstück übergreifen und entlang einer Transporteinrichtung aus einer Bearbeitungsstation und/oder zu einer Bearbeitungsstation hin bewegen, wobei die das Werkstück übergreifenden Greifbacken in ihrem gegenseitigen Abstand verstellbar an einem Träger angeordnet sind.

Solche Zu- und Abfuhrvorrichtungen sind insbesondere für längliche Werkstücke wie Balken, Rohre oder Platten bereits bekannt. Sie erfassen das Werkstück und bewegen es getaktet oder kontinuierlich aus der Bearbeitungsstation heraus bzw. führen es einer Bearbeitungsstation zu. Da die Greifbacken an einem in der Länge verstellbaren Träger angeordnet sind, können mit diesen Vorrichtungen unterschiedlich breite Werkstücke erfasst und transportiert werden.

Die bekannten Vorrichtungen sind dabei reine Greif- und Transporteinrichtungen, die lediglich der Bewegung eines Werkstücks aus einer Bearbeitungsstation oder zu einer Bearbeitungsstation bzw. zwischen Bearbeitungsstationen dienen.

Bei Werkstücken, an denen unterschiedliche Bearbeitungen durchgeführt werden sollen, ist es für eine rationelle Fertigung erforderlich, die Förderund Transportzeiten der Werkstücke zwischen den Bearbeitungsstationen möglichst zu minimieren.

Der vorliegenden Erfindung liegt daher die Aufgabe zugrunde, eine Vorrichtung der eingangs genannten Art so weiterzubilden, dass sie eine Verkürzung der Gesamtbearbeitungszeit des Werkstücks ermöglicht.

Die Aufgabe wird gelöst durch eine Vorrichtung zum Fördern eines Werkstücks aus einer Bearbeitungsstation und/oder zu einer Bearbeitungsstation mit einer Greifeinrichtung mit Greifbacken, die das Werkstück übergreifen und entlang einer Transporteinrichtung aus der Bearbeitungsstation und/oder zu einer Bearbeitungsstation hin bewegen, wobei die das Werkstück übergreifenden Greifbacken in ihrem gegenseitigen Abstand verstellbar an einem Träger angeordnet sind, die dadurch gekennzeichnet ist, dass an dem Träger außerdem mindestens ein zwischen die Greifbacken bewegbares Bearbeitungswerkzeug für das Werkstück angeordnet ist.

Die erfindungsgemäße Vorrichtung dient somit nicht nur dem Fördern eines Werkstücks von und/oder zu einer Bearbeitungsstation, sondern erlaubt selbst die Bearbeitung des geförderten Werkstücks. Auf diese Weise kann die Förderzeit zur Werkstückbearbeitung genutzt werden und stellt somit keine Totzeit im Fertigungsprozess dar. Außerdem können einzelne stationäre Bearbeitungsstationen eingespart werden, wenn die dort vorgesehenen Bearbeitungsschritte von der Fördervorrichtung übernommen werden können. Der Träger der Greifeinrichtung der erfindungsgemäßen Fördervorrichtung wird ähnlich wie das Portal einer Werkzeugportalmaschine genutzt.

Dabei ist es von Vorteil, wenn das mindestens eine Bearbeitungswerkzeug längs des Trägers verfahrbar angeordnet ist. Damit kann das mindestens eine Bearbeitungswerkzeug quer zur Transportrichtung an jeder gewünschten Stelle des Werkstücks eingesetzt werden.

Weitere Vorteile ergeben sich, wenn die Vorrichtung bei geöffneten Greifbacken außerhalb der Bearbeitungsstation längs der Transportvorrichtung über das Werkstück hinweg bewegbar ist. Dadurch sind auch in Transportrichtung des Werkstücks unterschiedliche Stellen des Werkstücks bearbeitbar. Die Bewegungen der Vorrichtung bei geöffneten Greifbacken können in den Förderpausen vorgenommen werden. Bei einer derartigen Ausgestaltung kann die Fördervorrichtung eine Werkzeugportalmaschine ersetzen.

Bei einer bevorzugten Ausgestaltung kann außerdem das mindestens eine Bearbeitungswerkzeug bei geöffneten und/oder geschlossenen Greifbacken betätigbar sein. Dies ermöglicht eine Werkstückbearbeitung sowohl während der Förderung des Werkstücks als auch bei nicht bewegtem Werkstück, was zu einer weiteren Reduktion der Fertigungszeit für das Werkstück führt.

Für komplexere Aufgaben ist es außerdem von Vorteil, wenn als Bearbeitungswerkzeug mindestens ein mehrachsiges Werkzeugaggregat mit einem Werkzeugwechsler vorgesehen ist. Damit ist sogar eine allseitige Bearbeitung des Werkstücks mit unterschiedlichen Werkzeugen möglich.

Als Bearbeitungswerkzeuge können im Prinzip sämtliche für die Fertigung des Werkstücks erforderlichen Werkzeuge eingesetzt werden. So lassen sich beispielsweise Fräser, Bohrer und Schraubeinrichtungen als Bearbeitungswerkzeuge vorsehen. Aber auch Sägen oder Nagel- oder Klammerapparate können am Träger angeordnet werden

Dabei lässt sich die Präzision der Bearbeitungsschritte erhöhen, wenn das mindestens eine Bearbeitungswerkzeug CNC-gesteuert ist.

Neben den Greifbacken können zusätzliche Fixiereinrichtungen für das Werkstück vorgesehen sein. So lassen sich am Träger beispielsweise auch Anpresseinrichtungen anordnen, mit denen das Werkstück gegen die Transporteinrichtung gedrückt werden kann, während es durch das mindestens eine Bearbeitungswerkzeug bearbeitet wird. Dadurch kann ein unbeabsichtigtes Abheben des Werkstücks von der Transporteinrichtung verhindert werden.

Für die Ausgestaltung der Transporteinrichtung sind unterschiedliche Möglichkeiten gegeben. Bei einer bevorzugten Ausführungsform kann die Transporteinrichtung mindestens eine Rollenbahn aufweisen, auf der das Werkstück aufliegt. Über Rollenbahnen lassen sich Werkstücke relativ reibungsarm fördern und gleichzeitig gut von unten abstützen.

Außerdem kann die Transporteinrichtung in ihrer Breite verstellbar sein und Einrichtungen zum Spannen des Werkstücks aufweisen. Dies ist insbesondere bei langen Werkstücken von Vorteil oder wenn das Werkstück nicht nur bei geschlossenen Greifbacken bearbeitet werden soll Die Spanneinrichtungen der Transporteinrichtung halten das Werkstück in diesen Fällen sicher, während das mindestens eine Bearbeitungswerkzeug an jeder gewünschten Stelle des Werkstücks einsetzbar ist.

Prinzipiell lässt sich die erfindungsgemäße Fördervorrichtung für eine Vielzahl von Werkstücken mit Vorteil einsetzen. Insbesondere längliche und flachere Werkstücke lassen sich mit dieser Vorrichtung hervorragend fördern und bearbeiten. So kommen als Werkstücke insbesondere ein Balken, eine Platte, ein Ständerwerk für ein Wandelement oder ein Wandelement in Frage.

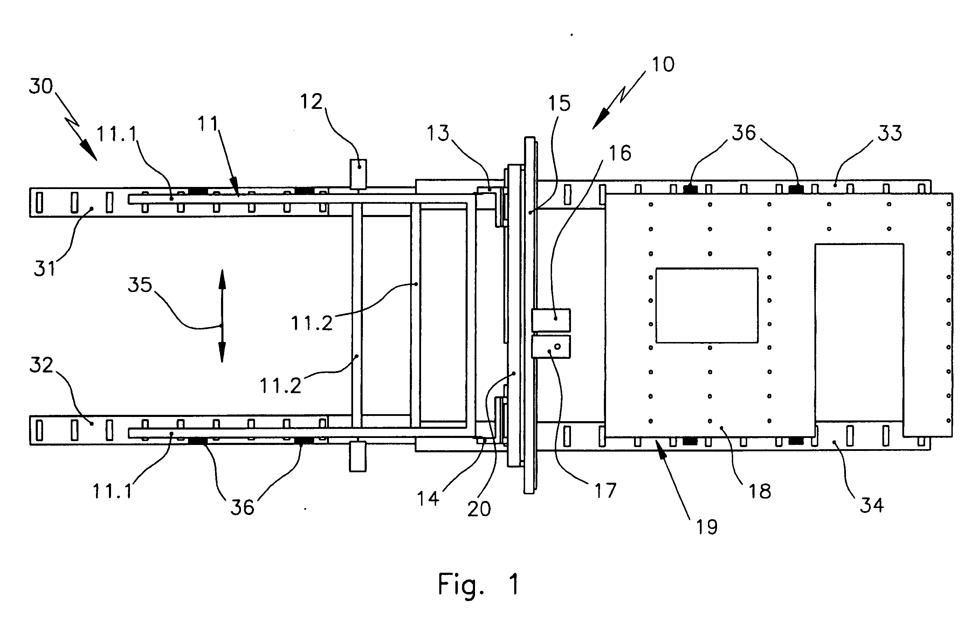

Nachfolgend werden bevorzugte Ausführungsbeispiele einer erfindungsgemäßen Vorrichtung anhand der Zeichnung detailliert beschrieben.

Die einzige Figur zeigt eine Draufsicht auf eine Fördervorrichtung 10 für ein Ständerwerk 11 eines Wandelements.

Hier weist also das Werkstück die Form eines Ständerwerks 11 auf, das von einer Bearbeitungsstation 12 in Form eines Nagelgerätes aus Längsbalken 11.1 und Querbalken 11.2 hergestellt wird.

Die Fördervorrichtung weist eine Greifeinrichtung 20 mit Greifbacken 13, 14 auf, wobei die Greifeinrichtung an einem Träger 15 befestigt ist. Die Greifbacken sind in Längsrichtung des Trägers 15 verstellbar angeordnet. Auf diese Weise lässt sich der gegenseitige Abstand der Greifbacken 13,14 auf unterschiedlich breite Werkstücke 11, d. h. hier unterschiedlich hohe Ständerwerke anpassen. Am Träger 15 sind außerdem zwei Bearbeitungswerkzeuge 16,17 angeordnet, von denen eines ein Nagelgerät 17 und eines eine Anpresseinrichtung 16 ist. Mithilfe dieser Bearbeitungswerkzeuge 16, 17, die längs des Trägers 15 verfahrbar sind, kann auf dem Ständerwerk 11 auf der Abfuhrseite der Bearbeitungsstation 12 ein plattenförmiges Element 18 auf die Balken 11.1 und 11.2 aufgenagelt werden und damit ein Wandelement 19 hergestellt werden. Während des Nagelns mit dem Werkzeug 17 drückt die Anpresseinrichtung 16 das plattenförmige Element 18 gegen die Balken 11.1, 11.2, um dieses während der Bearbeitung zu fixieren.

Im dargestellten Beispiel wird die Transporteinrichtung 30 für das Ständerwerk 11 auf der Zufuhrseite der Bearbeitungsstation 12 von zwei Rollenbahnen 31, 32 und auf der Abfuhrseite von zwei Rollenbahnen 33 und 34 gebildet. Die Rollenbahnen 31, 32 und 33, 34 sind in ihrem gegenseitigen Abstand verstellbar, was durch den Doppelpfeil 35 angedeutet ist. Außerdem sind an den Rollenbahnen 31, 32; 33, 34 jeweils Anschläge 36 vorgesehen, mit deren Hilfe und durch die Veränderbarkeit des gegenseitigen Abstands der Rollenbahnen 31, 32; 33, 34 das Werkstück 11 auf der Zufuhr- und auf der Abfuhrseite gespannt werden kann.

## Patentansprüche

1. Vorrichtung zum Fördern eines Werkstücks aus einer Bearbeitungsstation (12) und/oder zu einer Bearbeitungsstation (12) mit einer Greifeinrichtung (20) mit Greifbacken (13, 14), die das Werkstück (11, 51) übergreifen und entlang einer Transporteinrichtung (30) aus der Bearbeitungsstation (12) und/oder zu einer Bearbeitungsstation (12) hin bewegen, wobei die das Werkstück (11) übergreifenden Greifbacken (13, 14) in ihrem gegenseitigen Abstand verstellbar an einem Träger (15) angeordnet sind, **dadurch gekennzeichnet, dass** an dem Träger (15) außerdem mindestens ein zwischen die Greifbacken bewegbares Bearbeitungswerkzeug (16, 17) für das Werkstück (11) angeordnet ist.

2. Vorrichtung nach Anspruch 1, **dadurch gekennzeichnet, dass** das mindestens eine Bearbeitungswerkzeug (11) längs des Trägers (15) verfahrbar angeordnet ist.

3. Vorrichtung nach Anspruch 1 oder 2, **dadurch gekennzeichnet, dass** sie längs der Transportvorrichtung über das Werkstück (11) hinweg bewegbar ist.

4. Vorrichtung nach einem der vorhergehenden Ansprüche, **dadurch gekennzeichnet, dass** das mindestens eine Bearbeitungswerkzeug (16, 17) bei geöffneten und/oder geschlossenen Greifbacken (13, 14) betätigbar ist.

5. Vorrichtung nach einem der vorhergehenden Ansprüche, **dadurch gekennzeichnet, dass** als Bearbeitungswerkzeug (16, 17) mindestens ein mehrachsiges Werkzeugaggregat mit einem Werkzeugwechsler vorgesehen ist.

6. Vorrichtung nach einem der vorhergehenden Ansprüche, **dadurch gekennzeichnet, dass** als Bearbeitungswerkzeuge (16, 17) Fräser, Bohrer und Schraubeinrichtungen vorgesehen sind.

7. Vorrichtung nach einem der vorhergehenden Ansprüche, **dadurch gekennzeichnet, dass** das mindestens eine Bearbeitungswerkzeug (16, 17) CNC-gesteuert ist.

8. Vorrichtung nach einem der vorhergehenden Ansprüche, **dadurch gekennzeichnet, dass** am Träger (20) Fixiereinrichtungen (16) für das Werkstück (11), insbesondere Anpresseinrichtungen, angeordnet sind.

9. Vorrichtung nach einem der vorhergehenden Ansprüche, **dadurch gekennzeichnet, dass** die Transporteinrichtung (30) mindestens eine Rollenbahn (31 bis 34) aufweist, auf der das Werkstück (11) aufliegt.

10. Vorrichtung nach einem der vorhergehenden Ansprüche, **dadurch gekennzeichnet, dass** die Transporteinrichtung (30) in ihrer Breite verstellbar ist und Einrichtungen zum Spannen des Werkstücks (11) aufweist.

11. Vorrichtung nach einem der vorhergehenden Ansprüche, **dadurch gekennzeichnet, dass** das Werkstück (11) ein Balken, eine Platte, ein Ständerwerk für ein Wandelement oder ein Wandelement (19) ist.

## Claims

1. Device for conveying a workpiece from a processing station (12) and/or to a processing station (12), having a gripping device (20) with gripping jaws (13, 14) which engage over the workpiece (11, 51) and move it along a transporting apparatus (30) from the processing station (12) and/or to a processing station (12), the gripping jaws (13, 14) that engage over the workpiece (11) being arranged on a carrier (15) so that the distance between them is adjustable, **characterised in that**, additionally, at least one processing tool (16, 17) for the workpiece (11) is arranged on the carrier (15) so as to be displaceable between the gripping jaws.

2. Device according to claim 1, **characterised in that** the at least one processing tool (11) is arranged so as to be displaceable longitudinally of the carrier (15).

3. Device according to claim 1 or 2, **characterised in that** it is movable along the transporting apparatus past the workpiece (11).

4. Device according to one of the preceding claims, **characterised in that** the at least one processing tool (16, 17) can be operated when the gripping jaws (13, 14) are open and/or when they are closed.

5. Device according to one of the preceding claims, **characterised in that** there is provided by way of processing tool (16, 17) at least one multiple axle tool assembly having a tool changing device.

6. Device according to one of the preceding claims, **characterised in that** there are provided by way of processing tools (16, 17) shaping tools, drills and screw driving devices.

7. Device according to one of the preceding claims, **characterised in that** the at least one processing tool (16, 17) is CNC controlled.

8. Device according to one of the preceding claims, **characterised in that** there are arranged on the carrier (20), devices (16), especially adpressing devices, for holding the workpiece (11) fixed in position.

9. Device according to one of the preceding claims, **characterised in that** the transporting apparatus (30) has at least one roller track (31 to 34) upon which the workpiece (11) is supported.

10. Device according to one of the preceding claims, **characterised in that** the transporting apparatus (30) is adjustable in width and has devices for clamping the workpiece (11).

11. Device according to one of the preceding claims, **characterised in that** the workpiece (11) is a bar or is a panel or is a frame for a wall member or is a wall member (19).

## Revendications

1. Dispositif pour transporter une pièce d'un poste d'usinage (12) et/ou à un poste d'usinage (12), comprenant un dispositif de préhension (20) avec des mors de préhension (13, 14), qui recouvrent la pièce (11, 51) et se déplacent le long d'un dispositif de transport (30) du poste d'usinage (12) et/ou à un poste d'usinage (12), dans lequel les mors de préhension (13, 14) recouvrant la pièce (11) sont agencées sur un support (15) de manière à pouvoir ajuster leur distance mutuelle, **caractérisé en ce que** l'on agence en outre sur le support (15) pour la pièce (11) au moins un outil d'usinage (16, 17) déplaçable entre les mors de préhension.

2. Dispositif selon la revendication 1, **caractérisé en ce que** le au moins un outil d'usinage (11) est agencé de manière à pouvoir se déplacer le long du support (15).

3. Dispositif selon la revendication 1 ou 2, **caractérisé en ce qu'**il est déplaçable le long du dispositif de transport sur la pièce (11).

4. Dispositif selon l'une quelconque des revendications précédentes, **caractérisé en ce que** le au moins un outil d'usinage (16, 17) peut être actionné lorsque les mors de préhension (13, 14) sont ouverts et/ou fermés.

5. Dispositif selon l'une quelconque des revendications précédentes, **caractérisé en ce que** l'on prévoit comme outil d'usinage (16, 17) au moins un groupe d'outillage multiaxial avec un changeur d'outil.

6. Dispositif selon l'une quelconque des revendications précédentes, **caractérisé en ce que** l'on prévoit comme outil d'usinage (16, 17) des fraises, des forets et des dispositifs de vissage.

7. Dispositif selon l'une quelconque des revendications précédentes, **caractérisé en ce que** le au moins un outil d'usinage (16, 17) est commandé par CNC.

8. Dispositif selon l'une quelconque des revendications précédentes, **caractérisé en ce que** l'on agence sur le support (20) des dispositifs de fixation (16) pour la pièce (11), en particulier des dispositifs de serrage.

9. Dispositif selon l'une quelconque des revendications précédentes, **caractérisé en ce que** le dispositif de transport (30) présente au moins un transporteur à rouleaux (31 à 34), sur lequel repose la pièce (11).

10. Dispositif selon l'une quelconque des revendications précédentes, **caractérisé en ce que** le dispositif de transport (30) est ajustable sur sa largeur et présente des dispositifs pour serrer la pièce (11).

11. Dispositif selon l'une quelconque des revendications précédentes, **caractérisé en ce que** la pièce (11) est une poutre, une plaque, une ossature de montants pour élément de paroi ou un élément de paroi (19).
